# EUROPÄISCHE PATENTSCHRIFT

(11) **EP 1 952 094 B1**
(45) Veröffentlichungstag und Bekanntmachung des Hinweises auf die Patenterteilung: **21.04.2010**
(21) Anmeldenummer: 06807462.4
(22) Anmeldetag: 23.10.2006
(51) Int. Cl.: G01C 21/26, G08G 1/09

(54) **VERFAHREN ZUM BETREIBEN EINES NAVIGATIONSGERÄTS**
METHOD FOR OPERATING A NAVIGATION DEVICE
PROCEDE POUR EXPLOITER UN APPAREIL DE NAVIGATION

(30) Priorität: 16.11.2005 DE 102005054573
(43) Veröffentlichungstag der Anmeldung: 06.08.2008
(73) Patentinhaber: ROBERT BOSCH GMBH, 70442 Stuttgart (DE)
(72) Erfinder: CORNELIUS, Rainer, 31199 Diekholzen (DE); PFEIFFER, Heinz-Werner, 31249 Hohenhameln (DE); DUCKECK, Ralf, 31137 Hildesheim (DE); KRISHNAN, Kishore, 31137 Hildesheim (DE)
(86) Internationale Anmeldenummer: PCT/EP2006/067652
(87) Internationale Veröffentlichungsnummer: WO 2007/057277

(56) Entgegenhaltungen:
- EP-A- 1 536 580
- EP-A1- 1 063 625
- FR-A1- 2 846 811
- JP-A- 2000 207 682

## Beschreibung

### TECHNISCHES GEBIET

Die Erfindung betrifft ein Verfahren zum Betreiben eines Navigationsgeräts, das zusätzlich mit zwei Tunern TMC-Daten zur Ermittlung einer optimalen Fahrtroute empfängt.

### STAND DER TECHNIK

Navigationsgeräte sind in verschiedenen Ausführungsformen bekannt und geläufig. Sie umfassen im Wesentlichen eine Positionsbestimmungseinrichtung, die mit Hilfe von Signalen, die von GPS-Satelliten oder zukünftig den Galileo-Satelliten ausgesandt werden, ihre Position auf der Erdoberfläche in an sich bekannter Weise bestimmen. Weiterhin ist eine Zielführungseinrichtung bekannt, die ausgehend von dieser Position eine Route zu einem vom Nutzer des Navigationsgeräts vorgegebenen Zielpunkt errechnet und entsprechende Richtungshinweise optisch und/oder akustisch ausgibt. Hierzu wird für eine Zielführung für ein Kraftfahrzeug auf Informationen bezüglich des Strecken- und Wegenetzes des zu befahrenden Gebietes zureickgegriffen, die beispielsweise auf einer austauschbaren CD-Rom oder DVD hinterlegt sind. Auf Grund der hier anfallenden großen Datenmengen ist es bekannt, dass auf einer CD-Rom beispielsweise nur die Länder Mitteleuropas mit ihren Streckeninformationen hinterlegt sind und für weitere Länder eine weitere CD-Rom eingelegt werden muss.

Zusätzlich erhalten moderne Navigationsgeräte Informationen beispielsweise über einen kurzfristig auftretenden Stau oder eine Straßensperrung auf der zuvor errechneten Fahrtroute mit Hilfe sogenannter TMC-Daten (engl.: Traffic Message Control). Diese TMC-Daten werden von Radiostationen ausgesendet und von dem Navigationsgerät oder -system mit einem hierfür geeigneten Tuner empfangen. Dabei werden diese TMC-Daten parallel zu den eigentlichen Radiosignalen, also beispielsweise einem Musikstück, ausgestrahlt. Die Informationen welche Radiosender beziehungsweise auf welchen Frequenzen diese TMC-Daten ausgestrahlt werden sind ebenfalls auf der für dieses Land oder Gebiet vorgesehenen CD-Rom hinterlegt. Es sind auch Navigationsgeräte bekannt, die mit Hilfe eines sogenannten Zwei-Tuner-Konzepts, das heißt mit zwei Empfängern für Radiosignale, TMC-Daten empfangen können.

Die EP 1 063 625 A1 beschreibt ein Verfahren zum Betreiben eines Navigationsgeräts, das zusätzlich mit einem Tuner TMC-Daten zu Ermittlung einer optimalen Fahrtroute empfängt. Weiterhin kann nach einem Empfang erster TMC-Daten eine andere Radiostation selbsttätig gesucht werden, um einen anderen Sender mit anderen TMC-Daten zu suchen.

Die EP 1 536 580 A2 offenbart einen Rundfunkempfänger mit zwei Tunern beschrieben, wobei vom ersten Tuner ein herkömmliches Radioprogramm empfangen wird. Mit dem zweiten Tuner können Straßenverkehrsinformationen (TMC-Daten) empfangen werden. In den Pausen zwischen den einzelnen TMC-Datenblöcken kann der zweite Tuner zur Realisierung einer Programmfolgefunktion genutzt werden, das bedeutet, dass der zweite Tuner auf weiteren Frequenzen nach einem anderen Sender des gleichen Programms sucht, wie es bereits vom ersten Tuner empfangen wird. Falls die Empfangsqualität des zweiten empfangenen Rundfunksignals besser sein sollte, kann der erste Tuner auf diese Frequenz selbsttätig umgestellt werden.

Als nachteilig hierbei ist es anzusehen, dass das Navigationsgerät mit den zugeordneten Tunern oder Radioempfängern stets versucht, für alle Länder, die auf der CD-Rom oder DVD gespeichert sind, die entsprechende TMC-Daten zu empfangen beziehungsweise einen TMC-Sender zu suchen. Somit ist die Sammelzeit unnötig verlängert und die Reaktionszeit, bis alle relevanten TMC-Meldungen für das gerade befahrene Gebiet gesammelt sind, ist zu lange. Außerdem werden die Tuner hierdurch mit unnötigen Aufgaben überlastet, so dass auch bei an sich bekannten Zwei-Tuner-Konzepten das Problem auftritt, dass eine korrekte Sendersuche beispielsweise für RDS-Funktionalitäten nicht mehr durchgeführt werden kann.

Ausgehend von diesem Stand der Technik liegt der Erfindung die Aufgabe zugrunde, ein Verfahren zum Betreiben eines Navigationsgeräts der Eingangs genannten Art zu schaffen, mit dem gewährleistet ist, dass zuverlässig alle relevanten TMC-Daten gesammelt werden können, um bei der weiteren Berechnung der Fahrtroute Berücksichtigung zu finden.

Diese Aufgabe wird durch die im Anspruch 1 angegebenen Merkmale gelöst.

Der Kerngedanke der Erfindung besteht darin, dass ein Navigationsgerät in an sich bekannter Weise mit Hilfe zweier zusätzlicher Tuner TMC-Daten oder -Meldungen für das aktuell befahrene Gebiet beziehungsweise Land sammelt und diese Meldungen bei der weiteren Berechnung einer Fahrtroute berücksichtigt werden, um beispielsweise einem Stau rechtzeitig ausweichen zu können. Weiterhin ist das Navigationsgerät hard- und/oder softwaremäßig derart ausgelegt, dass, nachdem der zweite Tuner einen Sender mit TMC-Daten gefunden und die entsprechenden Meldungen empfangen hat, der erste Tuner daraufhin überprüft wird, welche TMC-Meldungen dort eingegangen und gespeichert worden sind. Sollten die Meldungen identisch sein, so kann vom Navigationsgerät darauf geschlossen werden, dass in beiden Tunern entweder der gleiche Sender oder zwei zu einer gemeinsamen Senderkette gehörende Sender, die zwar das gleiche Programm aber auf jeweils andere Frequenzen ausstrahlen, eingestellt sind. Dementsprechend wird der zweite Tuner in einem weiteren Suchlauf dazu veranlasst, einen anderen TMC-Sender zu suchen, um weitere sich gegebenenfalls von den im ersten Tuner eingegangenen TMC-Daten sich unterscheidende zu suchen. Sollten die mit dem ersten und dem zweiten Tuner empfangenen TMC-Daten sich bereits unterscheiden kann angenommen werden, dass bereits zwei unterschiedliche Spender empfangen werden und somit die Menge der zur Verfügung stehenden Daten bei der weiteren Berechnung einer optimalen Fahrroute bereits so groß wie möglich ist. Hierbei kann jeder der beiden Tuner als erster oder zweiter Tuner angesehen werden Gegebenenfalls können diese auch als Vordergrund- und Hintergrundtuner bezeichnet werden.

Der Vorteil der Erfindung besteht darin, dass das Verfahren in einfacher Weise in dem Navigationsgerät implementiert werden kann, so dass bei dessen Herstellung praktisch kein zusätzlicher Aufwand anfällt. Zudern ist durch das selbsttätige Ermitteln einer größeren Menge an TMC-Daten gewährleistet, dass stets eine optimale Fahrtroute beispielsweise unter Vermeidung von Staus oder Baustellen dem Nutzer angezeigt wird.

Vorteilhafte Ausgestaltungen sind in den Unteransprüchen gekennzeichnet.

Im Anspruch 2 ist vorgeschlagen, dass von einem der beiden Tuner TMC-Daten eines anderen Landes empfangen werden, insbesondere bei Annäherung an eine Ländergrenze. Das Annähern an eine Ländergrenze kann dabei vom Navigationsgerät in einfacher Weise festgestellt werden, da die Position des Navigationsgeräts sowie die Lage der Grenze bekannt sind. Beispielsweise kann bei einer Annäherung von 50 Kilometern an eine Ländergrenze, die entsprechend der Berechnung der Fahrtroute überfahren werden soll, von dem Navigationsgerät selbstständig mit einem der beiden Tuner mit der Suche nach TMC-Daten aus dem nächsten Land begonnen werden. In gleicher Weise kann von dem Navigationsgerät eine Zeit bis zum Überfahren der Ländergrenze anhand der Durchschnittsgeschwindigkeit und dem Abstand zur Grenze abgeschätzt und zum Beispiel eine halbe Stunde vor dem Überfahren der Grenze mit dem Sammeln von TMC-Daten begonnen werden. Selbstverständlich können hierbei auch mehrere Sender einer Senderkette, die jeweils auf unterschiedlichen Frequenzen senden, nach einander eingestellt werden. Eine Unterscheidung der einzelnen Sender ist dabei mit den Ländercodes der Sender, die bei den TMC-Daten mit übermittelt werden, möglich.

Gemäß der Ausgestaltung im Anspruch 3 wird ein Sender gesucht, der zur Senderkette eines bevorzugten TMC-Senders gehört. Ein solcher Sender strahlt im Wesentlichen das gleiche Programm aus, jedoch auf einer anderen Frequenz und kann unter Umständen eine bessere Empfangsqualität bieten. Falls ein derartiger Sender auf dem ersten Tuner eingestellt ist kann hierbei auch mit dem zweiten Tuner eine Suche nach TMC-Daten aus einem anderen Land durchgeführt werden.

Falls kein zur Senderkette gehörender Sender empfangbar ist wird entsprechend dem Anspruch 4 ein Sender gesucht, der die gleiche regionale Datenbankidentfikationsnummer wie der bevorzugte TMC-Sender aufweist. Dabei kann ebenfalls, wenn der erste Tuner auf einen solchen Sender eingestellt ist, mit dem zweiten Tuner nach Nachrichten aus einem anderen Land gesucht werden.

Falls auch ein solcher Sender nicht gefunden werden sollte kann, wie im Anspruch 5 gekennzeichnet, in einem automatischen Modus vom zweiten Tuner ein TMC-Sender mit der bestmöglichen Empfangsqualität gesucht werden, wobei dieser Sender in dem Land liegen sollte, in dem sich das Kraftfahrzeug gerade befindet. Hierbei sollte auch ein TMC-Sender gesucht werden, der die gleiche Serviceidentifikationsnummer aufweist wie der letzte eingestellte Sender. Dies ist daher wichtig, da ansonsten wichtige TMC-Daten verloren gehen könnten, da andere Sender mit anderer Serviceidentifikationsnummer eventuell die Daten in einer anderen Reihenfolge versenden.

### KURZBESCHREIBUNG DER ZEICHNUNGEN

Eine Ausführungsformen der Erfindung wird nachstehend anhand der Zeichnungen näher erläutert. Es zeigen:

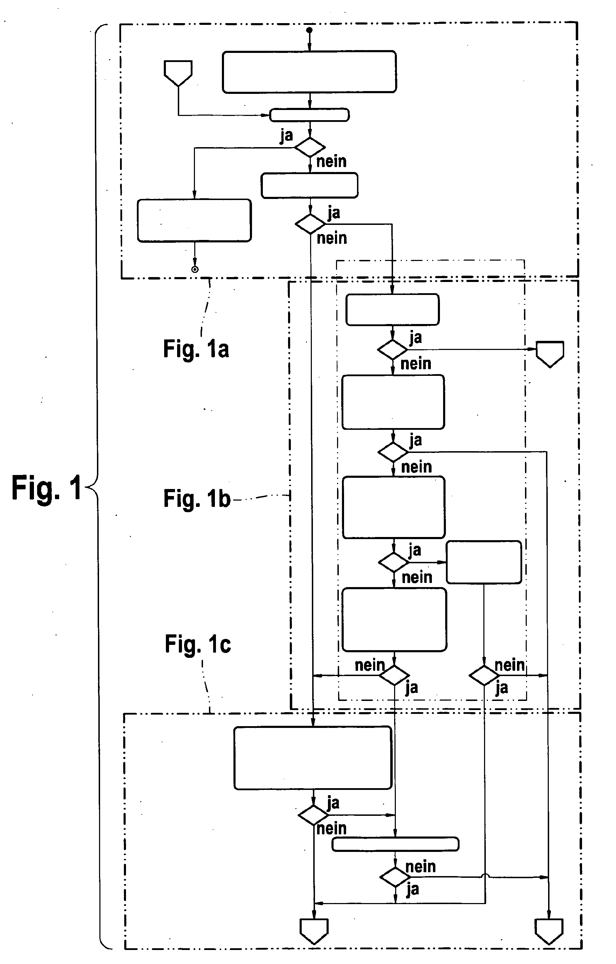

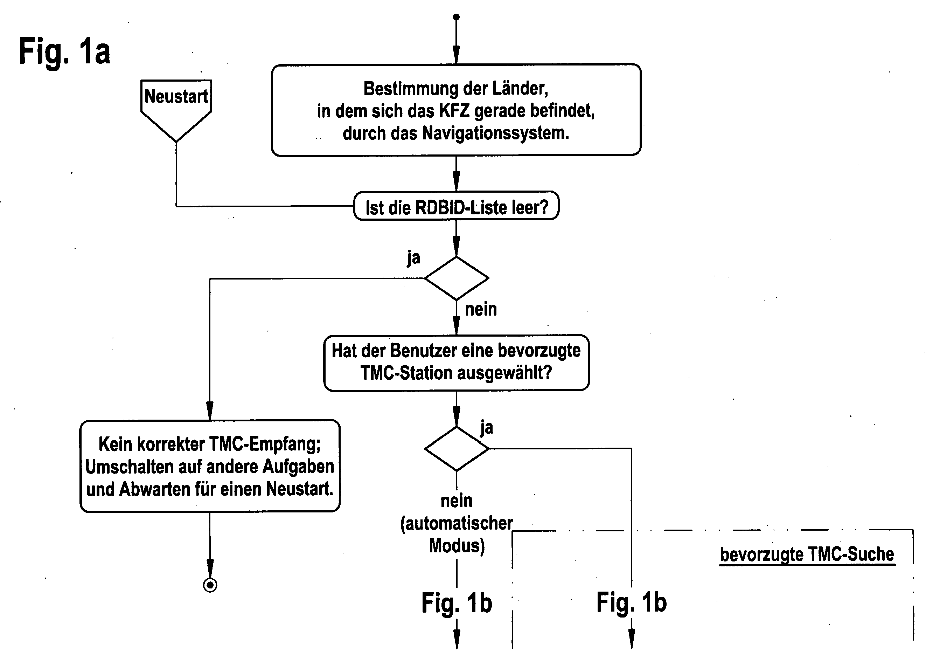

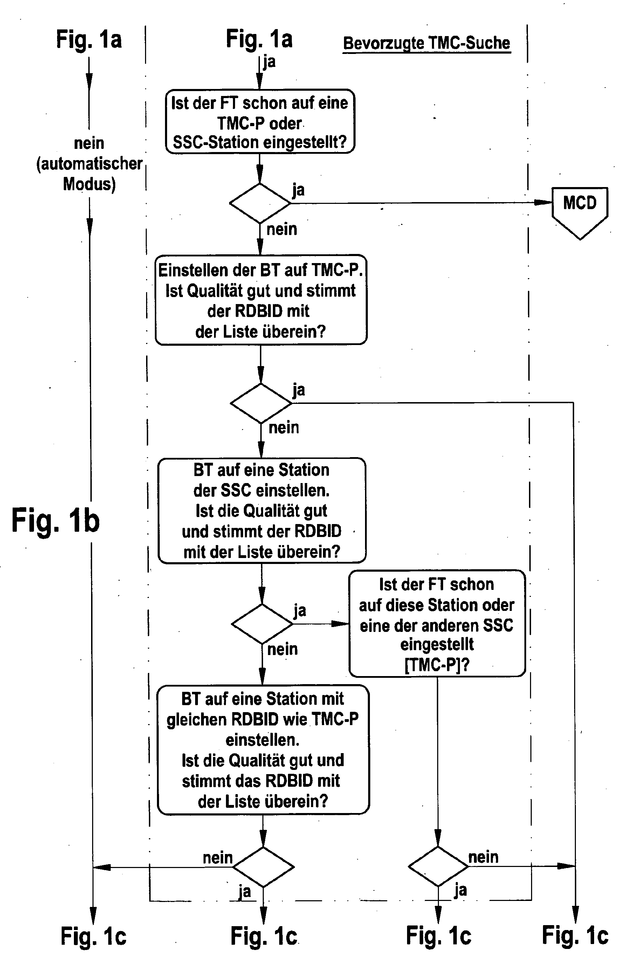

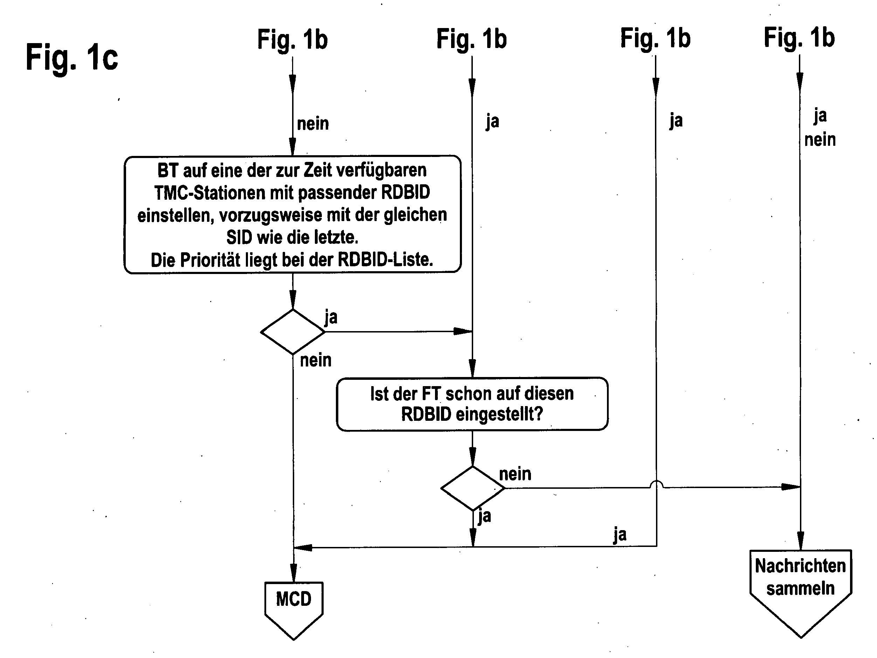

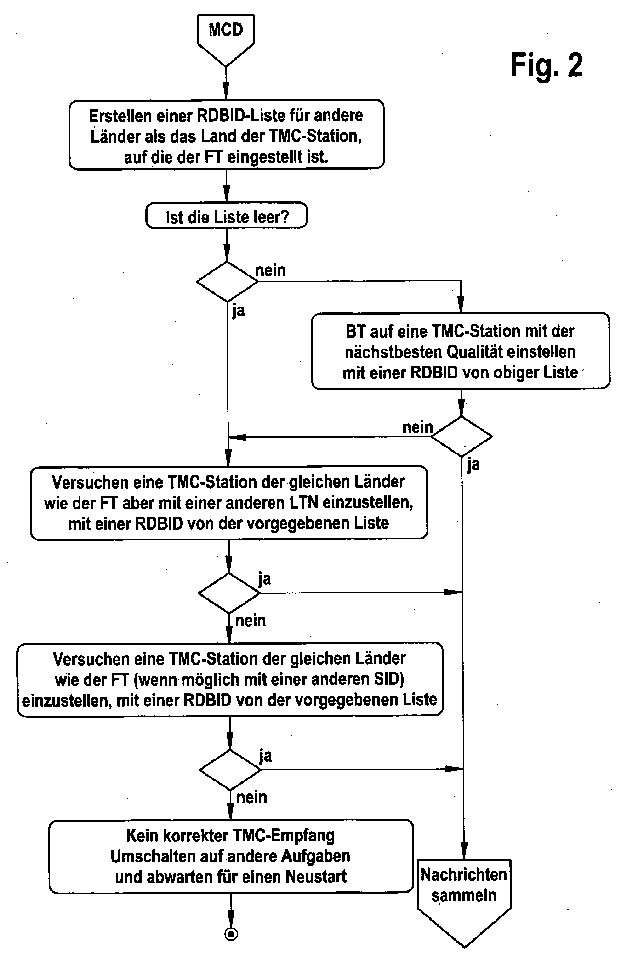

Fig. 1 und 2: ein Flussdiagramm des Verfahrens.

### BESTER WEG ZUR AUSFÜHRUNG DER ERFINDUNG

Aus den schematischen Darstellungen in den Figuren 1 und 2 ist der Ablauf des Verfahren zum Betreiben eines entsprechend ausgebildeten Navigationsgeräts mit zwei Tunern ersichtlich. Dabei ist in Figur 1 im Wesentlichen das Empfangen von TMC-Daten mit einem Navigationsgerät mit einem Zwei-Tuner-Konzept beschrieben, wobei hier an zwei Verzweigungen die in Figur 2 schematisch dargestellte neue Betriebsart des Suchens nach mehr TMC-Daten mit Hilfe zweier Tuner ausgewählt werden kann, wie durch die Kästchen der Bezeichnung "MCD" angedeutet.

Dieses zusätzliche Ermitteln von TMC-Daten besteht im Wesentlichen daraus, dass die mit Hilfe eines zweiten Tuners gefundenen TMC-Daten mit denjenigen des ersten Tuners verglichen werden, um nachfolgend mit dem zweiten Tuner einen anderen Sender mit gegebenenfalls zusätzlichen TMC-Daten zu suchen. Sollte dies nicht möglich sein, da es beispielsweise im Empfangsbereich keinen Sender mit weiteren TMC-Daten gibt, kann der zweite Tuner solange mit anderen Aufgaben beschäftigt werden beziehungsweise nach einer gewissen Wartezeit erneut dazu veranlasst werden, selbsttätig nach weiteren TMC-Daten zu suchen, gegebenenfalls auch aus einem benachbarten Land, das entsprechend der errechneten Fahrtroute noch befahren werden soll.

### BEZUGSZEICHENLISTE

- BT: zweiter Tuner
- FT: erster Tuner
- CC: Ländercode
- LTN: Kennung eines Radiosenders
- RDBID: regionale Datenbankidentifikatronsnummer, bestehend aus CC, LTN und SID
- SID: Service Identifikationsnummer
- SSC: Radiosender, der zur gleichen Senderkette gehört wie der TMC-P
- TMC-P: bevorzugter TMC-Sender
- TMC: Verkehrsmeldung ("Traffic Message Control")

## Patentansprüche

1. Verfahren zum Betreiben eines Navigationsgeräts, das zusätzlich mit zwei Tunern TMC-Daten zur Ermittlung einer optimalen Fahrtroute empfängt, **dadurch gekennzeichnet, dass** nach einer ersten Suche des zweiten Tuners (BT) gefundene TMC-Daten mit denjenigen des ersten Tuners (FT) verglichen werden, um mit dem zweiten Tuner (BT) einen anderen Sender mit anderen TMC-Daten zu suchen.

2. Verfahren nach Anspruch 1, **dadurch gekennzeichnet, dass** bei Annäherung an eine Ländergrenze TMC-Daten eines anderen Landes empfangen werden.

3. Verfahren nach Anspruch 1 oder 2, **dadurch gekennzeichnet, dass** ein Sender gesucht wird, der zur Senderkette eines TMC-Senders gehört, der im Wesentlichen das gleiche Programm ausstrahlt.

4. Verfahren nach einem der Ansprüche 1 bis 3, **dadurch gekennzeichnet, dass** ein Sender gesucht wird, der die gleiche regionale Datenbankidentifikationsnummer (RDBID) aufweist wie ein TMC-Sender.

5. Verfahren nach einem der Ansprüche 1 bis 4, **dadurch gekennzeichnet, dass** in einem automatischen Modus der zweite Tuner (BT) einen TMC-Sender mit bestmöglicher Empfangsqualität sucht.

## Claims

1. Method for operating a navigation appliance which additionally uses two tuners to receive TMC data for ascertaining an optimum journey route, **characterized in that** TMC data found after a first search by the second tuner (BT) are compared with those from the first tuner (FT) in order to use the second tuner (BT) to search for another station with other TMC data.

2. Method according to Claim 1, **characterized in that** when approaching a state boundary TMC data from another state are received.

3. Method according to Claim 1 or 2, **characterized in that** a station is sought which is part of the chain of stations associated with a TMC station which essentially broadcasts the same programme.

4. Method according to one of Claims 1 to 3, **characterized in that** a station is sought which has the same regional database identification number (RDBID) as a TMC station.

5. Method according to one of Claims 1 to 4, **characterized in that** in an automatic mode the second tuner (BT) searches for a TMC station with the best possible reception quality.

## Revendications

1. Procédé d'utilisation d'un appareil de navigation qui reçoit de plus par deux dispositifs d'accord des données TMC en vue de la détermination d'un itinéraire optimal,
**caractérisé en ce que**
des données TMC découvertes par le deuxième dispositif d'accord (BT) après une première recherche sont comparées à celles du premier dispositif d'accord (FT) pour chercher avec le deuxième dispositif d'accord (BT) un autre émetteur qui présente d'autres données TMC.

2. Procédé selon la revendication 1, **caractérisé en ce que** lors de l'approche de la frontière d'un pays, les données TMC reçues proviennent de l'autre pays.

3. Procédé selon les revendications 1 ou 2, **caractérisé en ce qu'**il cherche un émetteur qui fait partie de la chaîne d'émetteurs d'un émetteur TMC qui diffuse essentiellement le même programme.

4. Procédé selon l'une des revendications 1 à 3, **caractérisé en ce qu'**il cherche un émetteur qui présente le même numéro d'identification régionale de base de données (RDBID) qu'un émetteur TMC.

5. Procédé selon l'une des revendications 1 à 4, **caractérisé en ce qu'**en mode automatique, 1 le deuxième dispositif d'accord (BT) cherche l'émetteur TMC qui présente la meilleure qualité de réception possible.
